Europäisches Patentamt

European Patent Office

Office européen des brevets

(11) Veröffentlichungsnummer: **0 158 735**

**A1**

(12) **EUROPÄISCHE PATENTANMELDUNG**

(21) Anmeldenummer: **84115935.3**

(22) Anmeldetag: **20.12.84**

(51) Int. Cl.⁴: **B 64 F 1/36**
**B 66 F 7/00**

(30) Priorität: **22.03.84 DE 8408767 U**

(43) Veröffentlichungstag der Anmeldung:
**23.10.85 Patentblatt 85/43**

(84) Benannte Vertragsstaaten:
**AT BE CH DE FR GB IT LI LU NL SE**

(71) Anmelder: **Zippo Gesellschaft für Hebetechnik mbH**
**Heinrich-Hertz-Strasse 21**
**D-7600 Offenburg(DE)**

(72) Erfinder: **Frank, Werner**
**Weinbergstrasse 6**
**D-7441 Schlaitdorf(DE)**

(74) Vertreter: **Schmitt, Hans, Dipl.-Ing. et al,**
**Dreikönigstrasse 13**
**D-7800 Freiburg(DE)**

(54) **Hebe- und Abstellvorrichtung für Flugzeuge.**

(57) Eine Hebe- und Abstellvorrichtung (1) für kleine und mittelgroße Flugzeuge (2) hat zwei Hubsäulen (3 a, 3 b) mit je einem anhebbaren und absenkbaren Hubschlitten (9). Dabei sind an diesem Hubschlitten Tragarme (11, 13) befestigt, die an ihren freien Enden einen Radschuh (15, 16, 17) tragen.

Eine solche Vorrichtung ist preiswert herzustellen sowie einfach und narrensicher zu bedienen.

Fig.1

EP 0 158 735 A1

0158735

Firma
Zippo Gesellschaft
für Hebetechnik mbH
Heinrich-Hertz-Straße 21
7600 Offenburg

UNSERE AKTE · BITTE STETS ANGEBEN!

E 84 578 S

Hebe- und Abstellvorrichtung für Flugzeuge

Die Erfindung betrifft eine Hebe- und Abstellvorrichtung
für kleine und mittelgroße Flugzeuge.

Das Unterbringen von Flugzeugen in Hangars, Stellflächen
von Flugplätzen usw. erfordert einen großen Raumbedarf,
weil der Seiten-Abstand zwischen benachbarten Flugzeugen
durch die Spannweite von deren Flügel bestimmt wird. Deshalb hat man bereits Vorrichtungen geschaffen, durch die
jedes zweite Flugzeug einer Flugzeugreihe mittels Hebeeinrichtungen angehoben und auf einem höheren Niveau als
das oder die benachbarten Flugzeuge abgestellt werden
kann; dabei können sich nämlich die Tragflächen benachbarter Flugzeuge im gleichen Zwischenraum befinden und es
ist eine erhebliche Platzersparnig möglich.
So zeigt z. B. die GB-PS 13 665 78 feststehende, rahmenartige Bühnen, die im Längsprofil etwa U-förmig ausgebildet sind. In der U-Öffnung kann ein auf dem Boden abgestelltes Flugzeug mit seinen Flügeln Platz finden und mit
Hilfe eines besonderen, gabelstaplerähnlichen Gerätes kann
man dann auf diesem Rahmen oberhalb des unten stehenden
Flugzeuges ein weiteres Flugzeug abstellen. Die vorer-

S/H                                                    /2

wähnten Abstellbühnen ermöglichen nicht das Hochheben und Absenken eines Flugzeuges, obgleich sie verhältnismäßig aufwendig sind. Zusätzlich benötigt man ein verfahrbares Hubgerät und Personal, welches damit sachkundig umgehen, insbesondere auch genau rangieren kann.

Man kennt auch bereits eine verfahrbare Hebeeinrichtung, mit der man Flugzeuge von gleichem oder ännlichem Stirnprofil so weit anheben kann, daß die Tragflächen von drei benachbart stehenden Flugzeugen teilweise übereinander angeordnet werden können. Dadurch ergibt sich in Seitenrichtung eine gewisse Platzersparnis, die jedoch durch den Platzbedarf des Rumpfes und der Hubeinrichtung für das angehobene Flugzeug begrenzt ist. Zwei Flugzeuge etwa genau Rumpf über Rumpf kann man mit dieser Vorrichtung nicht unterbringen oder anheben. Für zwei benachbart stehende Hoch- und Tiefdecker ist diese Vorrichtung ebenfalls nicht recht einsetzbar.

Bekannt geworden ist auch bereits eine Hebeeinrichtung zum Verbringen von Flugzeugen in eine gegenüber der normalen Parkebene vor einem Abfertigungsgebäude höher gelegenen Parkebene, bei der ein zunächst ebenerdig angeordneter Bühnenwagen als Abstellfläche für ein Flugzeug dient, wobei dieser Bühnenwagen anschließend über eine schräge Ebene auf ein erhöhtes Niveau gezogen wird (vgl. DE-OS 19 08 321). Ferner zeigt GB-PS 11 86 689 bereits eine in ihrer unteren Position auf Bodenniveau befindliche Bühne zum Abstellen eines Flugzeuges, wobei diese Bühne dann in eine erhöhte Position zu bewegen ist. Die beiden letztgenannten Bühnen stellen ausgedehnte stationäre Konstruktionen mit großem Platzbedarf dar, die wenigstens zum Teil unterhalb des Bodens untergebracht werden müssen. Solche Hebebühnen lassen sich praktisch nicht mit vertretbarem Aufwand herstellen und einbauen.

/3

Es besteht daher die Aufgabe, eine Hebe- und Abstellvorrichtung für kleine und mittelgroße Flugzeuge zu schaffen, die einerseits preiswert herzustellen und auch einfach und narrensicher zu bedienen ist, mittels der andererseits ein Flugzeug in gesicherter Weise in einer Höhe insbesondere zum Parken gehalten werden kann, während unter ihm für das Abstellen eines weiteren, vergleichbaren Flugzeuges Platz ist oder gegebenenfalls bedarfsweise unter ihm Reparaturarbeiten usw. an ihm ausgeführt werden können.

Die erfindungsgemäße Lösung besteht insbesondere darin, daß eine Hebe- und Abstellvorrichtung zwei Hubsäulen mit je einem anhebbaren und absenkbaren Hubschlitten aufweist, und daß an den Hubschlitten Trägerarme befestigt sind, die an ihren freien Enden Radschuhe od. dgl. zur Aufnahme der Flugzeugräder tragen.

Eine solche Hebe- und Abstellvorrichtung für Flugzeuge, nachstehend kurz "Vorrichtung" genannt, ist nicht nur einfach in der Herstellung, im Transport zum Aufstellungsort sowie vergleichsweise einfach zu montieren, sondern auch von nicht besonders geschultem Personal, beispielsweise vom Piloten selbst, leicht und sicher zu bedienen. Der letztgenannte Gesichtspunkt ist auch aus folgenden Gründen beachtlich: Auch klein- und mittelgroße Flugzeuge, für welche die Vorrichtung vorgesehen ist, kosten z. B. je DM 250.000,-- bis DM 500.000,--. Wenn sie auf engstem Raum nebeneinander und übereinander stehen, kann bei einem Versagen der Vorrichtung und/oder deren Fehlbedienung leicht ein Schaden zwischen DM 500.000,-- und DM 1.000.000,-- entstehen.

Zusätzliche Weiterbildungen der Erfindung sind in weiteren Unteransprüchen aufgeführt. Nachstehend ist die Vorrichtung anhand von Ausführungsbeispielen in Verbindung mit der Zeichnung in den erfindungswesentlichen Einzelheiten noch näher erläutert und beschrieben. Es zeigt:

Fig. 1    eine teilweise im Schnitt gehaltene Stirnansicht einer erfindungsgemäßen Vorrichtung mit zwei darin untergebrachten Flugzeugen,

Fig. 2    eine Aufsicht auf eine Vorrichtung entsprechend Fig. 1 sowie in vergrößerten Maßstäben

Fig. 3    eine teilweise im Schnitt gehaltene Seitenansicht eines Bug-Radschuhes der Vorrichtung,

Fig. 4    eine teilweise im Schnitt gehaltene Aufsicht auf eine Hubsäule bzw. deren mechanische Verriegelung,

Fig. 5    einen Teillängsschnitt durch die mechanische Verriegelung entsprechend der Schnittlinie V-V in Fig. 4,

Fig. 6    schematisch im senkrechten Längsschnitt eine Hubsäule,

Fig. 7    das freie Ende eines Tragarmes und

Fig. 8    einen Teil-Langsschnitt des Bug-Radschuhes ähnlich Fig. 3.

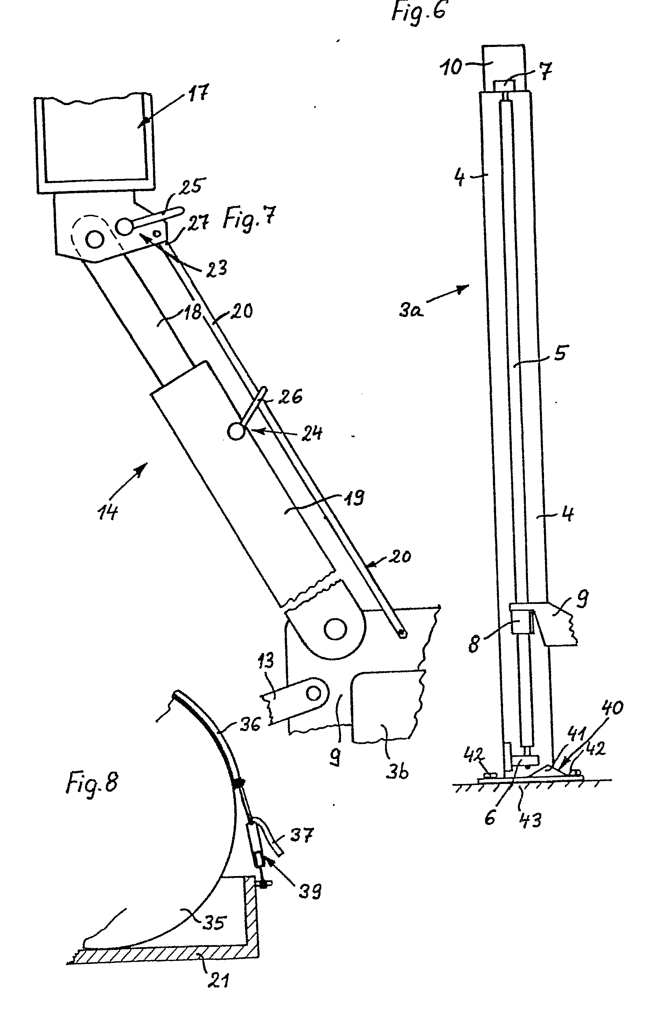

Eine im ganzen mit 1 bezeichnete Hebe- und Abstellvorrichtung für kleine und mittelgroße Flugzeuge 2 weist zwei Hubsäulen 3 a und 3 b auf. Am Beispiel der im ganzen mit 3 a bezeichneten Hubsäule ist deren prinzipieller Aufbau näher erläutert. Ihr kastenartiger Säulenkörper 4 ist in Fig. 6 im Längsschnitt dargestellt. Dementsprechend erkennt man eine im wesentlichen lotrecht angeordnete Gewindespindel 5, die unten in einer Lagerkonsole 6 und oben in einem Getriebeanschluß-Lager 7 gelagert ist. Auf dieser Gewindespindel 5 befindet sich eine Tragmutter 8 für einen Hubschlitten 9. Der Antrieb der Gewindespindel 5 erfolgt über eine schematisch angedeutete Elektromotor-Getriebeeinheit 10.

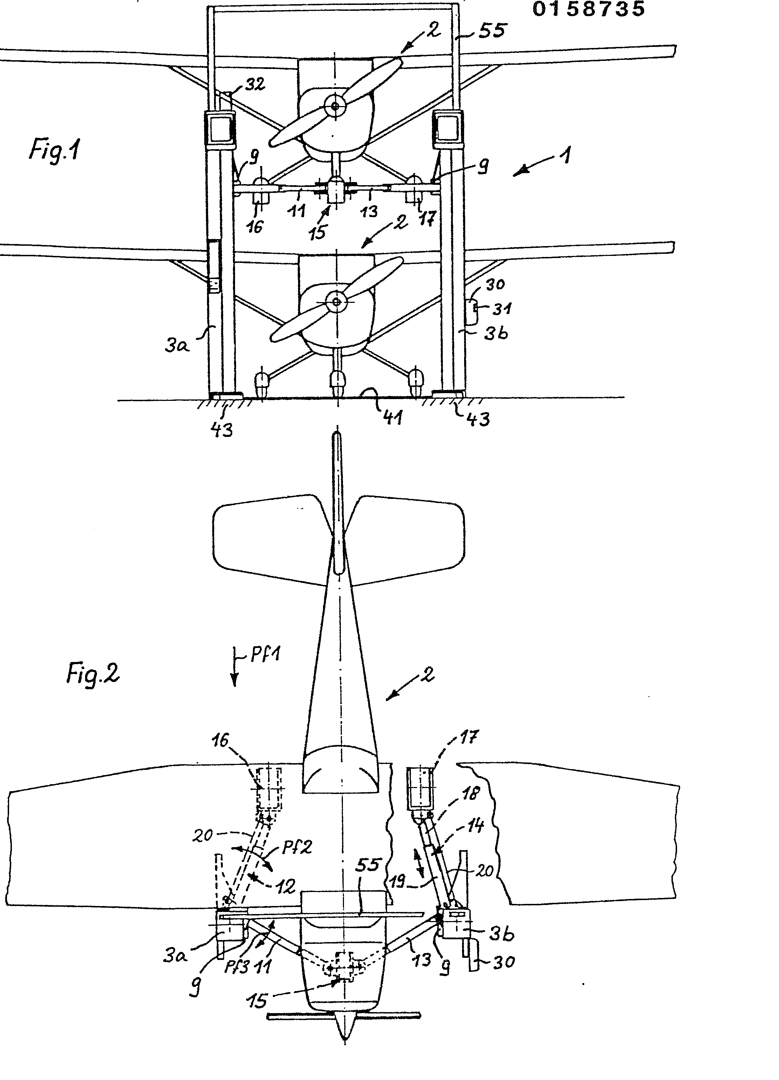

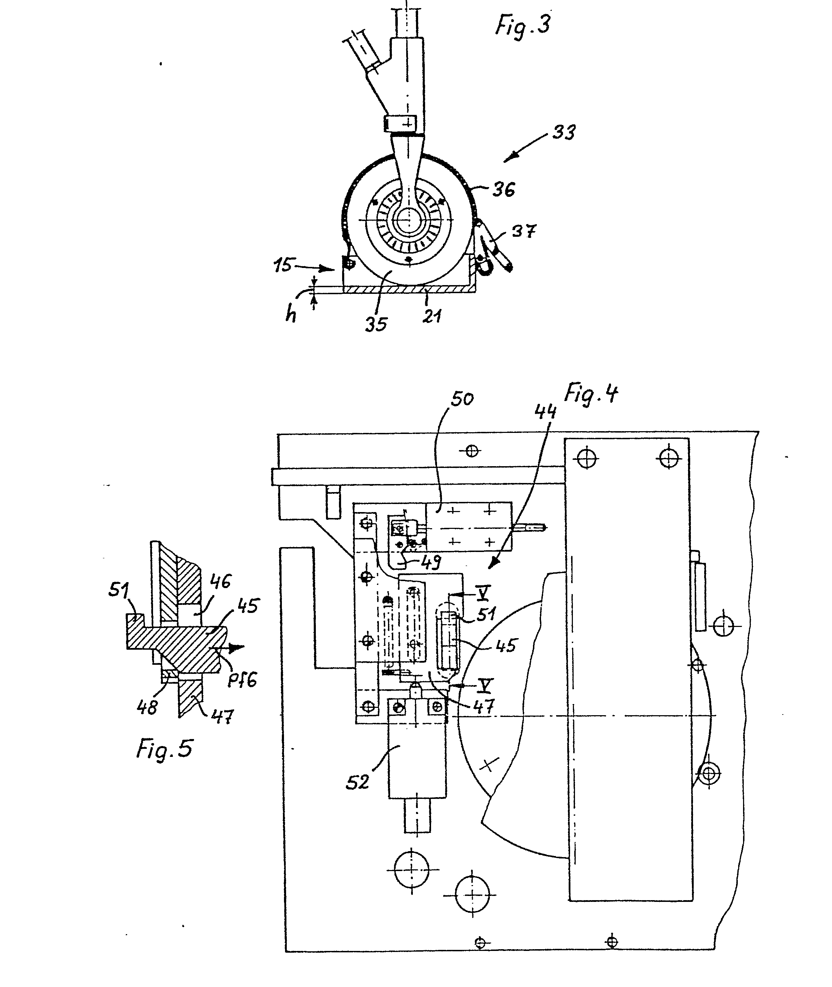

Wie aus Fig. 1 und 2 gut erkennbar, sind an den beiden Hubschlitten 9 der beiden Hubsäulen 3 a und 3 b je zwei Trägerarme 11 und 12 sowie 13 und 14 vorgesehen. Die beiden, in Einfahrrichtung (vgl. Pfeil Pf 1 in Fig. 2) des Flugzeuges 2 gesehen, vorderen Tragarme 11 und 13 tragen gemeinsam einen Bug-Radschuh 15, wie er in seiner Umrißform gut aus Fig. 1 und 3 erkennbar ist. Die, in Auffahrrichtung des Flugzeuges gesehen, hinteren Tragarme 12 und 14 tragen je einen Radschuh 16 bzw. 17 an ihrem freien Ende. Die Tragarme 11 bis 14 sind schwenkbar im Hubschlitten 9 gelagert (vgl. Pfeil Pf 2 und Pf 3). Außerdem sind die Tragarme 11 bis 14 längenveränderbar ausgebildet. Dies ist dadurch realisiert, daß die Tragarme aus mindestens zwei ineinander teleskopartig einschiebbaren Armrohren 18 und 19 zusammengesetzt sind, wie gut aus Fig. 2 erkennbar. Dadurch, daß die Tragarme 11 bis 14 verschwenkbar an den zugehörigen Hubschlitten 9 angebracht und/oder längenveränderbar ausgebildet sind, kann die Vorrichtung 1 leicht auf die geometrischen Verhältnisse unterschiedlicher Flugzeuge 2 bzw. auf deren Radstand angepaßt werden. Dabei sind zumindest die für die Hauptfahrwerk-Räder vorgesehenen Radschuhe 16 und 17 verschwenkbar an den Tragarmen 12 und 14 angelenkt, so daß die Radschuhe stets parallel zur Einfachrtrichtung des Flugzeuges gestellt werden können. Gegebenenfalls können dabei diese für die Räder des Hauptfahrwerkes vorgesehenen Radschuhe 16 und 17 durch einen parallelen Lenker 20 der gleichen Schwenkführung unabhängig von der Schwenklage der Tragarme in·Fahrtrichtung Pf 1 des Flugzeuges 2 gehalten sein. Da am Bug-Radschuh 15 je ein Tragarm 11 und 13 je einer Hubsäule 3 a und 3 b angreift, wird der Bug-Radschuh 15 mittig und in Fahrtrichtung gehalten. Durch entsprechendes Verschwenken dieser vorderen Tragarme 11 und 13 bzw. deren Verlängern ist der Bug-Radschuh in mittiger Lage in unterschiedliche Abstände zu den Hubsäulen 3 a, 3 b der Vorrichtung zu verstellen.

In Fig. 3 erkennt man gut, daß die Höhe h der Grundplatte 21 des dortigen Bug-Radschunes 15 flach ausgebildet ist und darunter wird verstanden, daß die Höhe h nur wenige, z. B. 3 mm beträgt. Analoges gilt auch für die anderen Radschuhe 16 und 17. Eine solche Ausbildung ist bei derartigen Hebe- und Abstellvorrichtungen 1 von Vorteil, da die dafür vorgesehenen Flugzeuge 2 in aller Regel von Hand in die Radschuhe hineinbewegt werden und man bei einer solchen Konstruktion unnötige Rollwiderstände klein hält.

In Fig. 7 erkennt man zwei Verriegelungseinrichtungen 23 und 24. Sie besitzen je einen Hebel 25 und 26. Mit der Verriegelungseinrichtung 24 kann die einmal eingestellte Länge eines Tragarmes 11 bis 14 festgelegt werden. Mit der Verriegelungseinrichtung 23 kann die Schwenklage eines Radschuhes 16 bzw. 17 gegenüber dem Tragarm festgelegt werden. Ist die Vorrichtung 1 dementsprechend einmal auf die geometrische Lage der Räder eines Flugzeuges 2 eingestellt, können die Radschuhe in diesen Positionen festgelegt werden.

Die Hubschlitten 9 sind in den jeweiligen Hubsäulen 3 a bzw. 3 b in ihrer Obenstellung formschlüssig mechanisch verriegelbar. Gelangen die Hubschlitten 9 beim Hochfahren des oberen Flugzeuges 2 in die Hubschlitten-Obenstellung, rastet in noch näher zu beschreibender Weise ein mechanischer Riegel ein, der ein unbeabsichtigtes Absenken der Hubschlitten 9 und damit der Tragarme 11 bis 14 bzw. des Flugzeuges 2 verhindert, auch wenn unvorhergesehenerweise die eingangs beschriebene Hubmechanik 5 bis 10 nicht ordnungsgemäß arbeitet, Schäden erleidet usw. Zum Ablassen des Flugzeuges 2 aus seiner Obenstellung ist eine Löseeinrichtung für die mechanische Verriegelung vorgesehen (vgl. Fig. 4 und 5).

Die Vorrichtung 1 besitzt auch einen Schaltkasen 30 für das Auf- und Ablassen der Hubschlitten, ferner ein Schloß 31, welches die Schaltmöglichkeit sichert. Dies kann beispielsweise dadurch realisiert sein, daß der Schaltkasten 30 mit einer verschließbaren Tür und einem Schloß 31 versehen ist, wodurch eine unbefugte Betätigung der Vorrichtung 1 verhindert wird.
In Fig. 1 erkennt man auf der Säule 3 a oben eine Signallampe 32. Sie kann so geschaltet sein, daß sie Warnsignale aussendet, wenn die Hubsäulen betätigt werden. Wegen der Spannweite der Flügel von Flugzeugen ist es nämlich erwünscht, daß bei deren Bewegung, hier insbesondere bei deren Hubbewegung, erhöhte Aufmerksamkeit im Umfeld bei Dritten erreicht wird, was bei der Vorrichtung 1 mit Hilfe einer solchen Warnlampe 32 erreichbar ist.

In Fig. 3 erkennt man gut, daß an dem Bug-Radschuh 15 eine lösbare Radhalterung 33 vorgesehen ist, die ein unbeabsichtigtes Abrollen dieses Bugrades 35 aus dem Bug-Radschuh 15 verhindert. Vorzugsweise besteht dabei diese Radhalterung aus einer lösbaren Halteschlaufe 36, die einerseits am Bug-Radschuh 15 befestigt und um das Bugrad 35 oben herumgelegt ist sowie mit einem Schlaufenhalter 37 andererseits am Bug-Radschuh 15 festgelegt werden kann. Damit ist das Flugzeug 2 auf einfache Weise gegen Abrollen von den Radschuhen gesichert. Zwischen dem Radschuh 15 einerseits und der Radhalterung, im Ausführungsbeispiel zwischen dem Bugschuh 15 und dem Schlaufenhalter 37 ist, wie in Fig. 8 vergrößert dargestellt, eine Last-Schalteinrichtung 39 vorgesehen. Wird die Radhalterung 31 angelegt, entsteht ein mechanischer Zug in der Last-Schalteinrichtung, was einen Schaltvorgang bei ihm auslöst. Man kann nun die Bedienungsmöglichkeit der Vorrichtung 1 mittels dieser Last-Schalteinrichtung 39 derart, vorzugsweise auf elektrischem Wege, sichern, daß das Bewegen der Hubschlitten nur dann möglich ist, wenn die Last-Schalteinrichtung 39 unter Zugspannung steht, d. h., sichergestellt ist, daß das entsprechende Rad, vorzugsweise das Bugrad, gegen Ablaufen vom Radschuh gesichert ist.

In Fig. 1 erkennt man noch eine leicht gewölbte Verbindungsplatte 40 zwischen den beiden Hubsäulen 3 a und 3 b. Mit ihrer Unterseite bildet diese Platte einen in Fig. 6 angedeuteten Verbindungskanal 41 zwischen den beiden Hubsäulen 3 a und 3 b. Dort können Leitungen durchgeführt werden, die z. B. ein synchrones Laufen der Motoren 10 auf beiden Hubsäulen 3 a und 3 b bewirken. Auch kann dort beispielsweise eine Leitung vom Schaltkasten 30 zur Signallampe 32 hindurchgeführt werden. Selbstverständlich könnten entsprechende Leitungen auch entlang der die beiden Hubsäulen verbindenden Tragarme 11 und 13 geführt sein.

Die gesamte Vorrichtung 1 ist verhältnismäßig einfach herzustellen, zu transportieren und kann am Bedarfsplatz leicht z. B. mittels Scnrauben 42 an Fundamentstellen 43 befestigt werden. Im Bedarfsfall kann eine solche Vorrichtung auch von einem Aufstellungsort zu einem anderen gebracht werden, beispielsweise, wenn die Spannweiten von Flugzeugen eine andere Aufstellung benachbarter Vorrichtungen 1 als notwendig oder.wünschenswert erscheinen lassen.

Dementsprechend bietet die Vorrichtung 1 eine verhältnismäßig einfache, vielseitig einsetzbare Abstellvorrichtung für kleine und mittelgroße Flugzeuge dar; gleichzeitig kann sie als Hebevorrichtung für das Durchführen von Reparaturarbeiten unterhalb des Flugzeuges eingesetzt werden.

Die bereits kurz angesprochene Verriegelung der Hubschlitten in Obenstellung bzw. die Löseeinrichtung dafür arbeitet folgendermaßen:
Die im ganzen mit 44 bezeichnete mechanische Verriegelung weist eine bezüglich der lotrechten Bewegung des Hubschlittens 9 mit diesem fest verbundene Sicherungstraverse 45 (Fig. 5) auf. Erreicht der Hubschlitten 9 seine obere Endlage, verschiebt sich diese Traverse 45 durch eine Aussparung 46 in den Bereich einer Kopfplatte 47. Dies kann beispielsweise durch eine Feder erfolgen. Beim Einschieben der Traverse 45 in den Bereich der Kopfplatte 47 wird ein Riegel 48 zurückgestoßen und mittels einer Rückholfeder und einem Endanschlag 49 in Arretierstellung gebracht, wie es gut aus Fig. 5 erkennbar ist. Der Hubschlitten 9 ist jetzt in seiner Oben-Stellung gegen unbeabsichtigtes Absenken mechanisch gesichert. Ein solches unbeabsichtigtes Absenken könnte beispielsweise auftreten, wenn die Selbsthemmung zwischen Tragmutter 8 und Gewindespindel 5 versagen würde.
Will man den bzw. die Hubschlitten 9 der Vorrichtung 1 wiederum absenken, wird bei jeder Verriegelung 44 mit Hilfe eines Zugmagneten 50 der Endanschlag 49 verstellt.

Die vorerwähnte Rückholfeder wird entriegelt. Dabei gibt der Riegel 48 die Nase 51 der Traverse 45 (Fig. 5) frei. Die Traverse 45 kann dann in Richtung des Pfeiles Pf 6 aus dem Bereich der Kopfplatte 47 zurückgeführt werden, der Hubschlitten 9 ist entriegelt und kann abgesenkt werden.

Hat sich der Hubschlitten 9, während die Traverse 45 in Riegelstellung (Fig. 5) sich befindet, z. B. wegen Versagen der Selbsthemmung, abgesetzt, so ist zunächst ein Taster 52 zu betätigen. Dies kann auch am Schaltkasten 30 erfolgen. Infolge Betätigung eines solchen Tasters wird der Hubschlitten 9 von der Gewindespindel 5 zunächst etwas angehoben, so daß die Traverse 45 nicht mehr in der Aussparung 46 aufliegt und dadurch in ihrer Beweglichkeit behindert ist. Durch die erwähnte Taster-Bedienung gelangt also die Traverse 45 in die in Fig. 5 vorgesehene STellung, aus der heraus die Entriegelungsbewegung (Pf 6) in der vorbeschriebenen Weise stattfinden kann.

In Fig. 1 und 2 erkennt man noch einem im Stirnprofil (Fig. 1) U-förmig ausgebildeten Verbindungsbügel 55 zwischen den beiden Hubsäulen 3 a und 3 b. Er kann zweckmäßigerweise hohl als Leitungsführung ausgebildet sein, gegebenenfalls auch noch eine Stabilisierungsfunktion haben.
Die bereits erwähnte Signallampe 32 kann auch so geschaltet sein, daß sie dann aufleuchtet, wenn die Verriegelungseinrichtung 44 nicht in der Obenstellung der Hubwagen 9 in die Riegelstellung eingerückt ist.

Die Vorrichtung 1 arbeitet folgendermaßen:
Ein Flugzeug 2 wird in die Radschuhe 15 bis 17 eingeschoben. Danach wird wenigstens ein Rad des Flugzeuges 2,

/11

vorzugsweise dessen Bugrad 35, mit der Halteschlaufe 36 am entsprechenden Radschuh 15 festgelegt. Dadurch wird die Last-Schalteinrichtung 39 der Radhalterung 33 betätigt, wodurch ein entsprechender Stromkreis der Schaltanordnung derart beeinflußt wird, daß die Hubsäulen 3 a, 3 b betätigt werden können. In der Obenstellung dieser Hubschlitten 9 rücken diesen zugeordnete Sicherungstraversen 45 durch eine Aussparung 46 einer zum Säulenkörper 4 gehörigen Kopfplatte 47, wodurch die Traverse 45 und der zugehörige Hubschlitten 9 gegen Absinken mechanisch gesichert ist. Zusätzlich ist die Traverse 45 mit Hilfe eines Riegels 48 und einer an der Traverse 45 vorgesehenen Sicherungsnase 51 gegen unbeabsichtigtes Entriegeln gesichert. Vor dem Absenken der Hubschlitten 9 wird die Traverse 45 in der bereits beschriebenen Weise aus der Sicherungsstellung (Fig. 5) in eine Freigabestellung (vgl. Pfeil Pf 6) verschoben.

Im Ausführungsbeispiel ist die Vorrichtung 1 im Zusammenwirken mit einem dreirädrigen Flugzeug gezeigt, bei dem ein Hauptfahrwerk mit zwei Rädern und ein Bugrad 35 vorgesehen sind. Dem sind im vorerwähnten Ausführungsbeispiel die entsprechenden Radschuhe 15 bis 17 zugeordnet. Selbstverständlich kann die Vorrichtung auch auf Flugzeuge abgestimmt sein, die nur ein zweirädriges Fahrwerk und beispielsweise einen Hecksporn oder ein zweirädriges Hauptfahrwerk und ein Heckrad haben. Dann sind die Tragarme 11 bis 14 der Hubvorrichtung auf die entsprechenden Unterstützungsstellen eines solchen Flugzeuges abzustimmen. Beispielsweise kann auch anstelle eines Radschuhes bei einem Hecksporn ein darauf abgestimmtes Tragorgan das Flugzeug untergreifen. Für die Aufnahme eines Heckrades gilt analoges. Selbstverständlich kann die Vorrichtung auch das Flugzeug 2 an einer geeigneten Stelle mit einer anders gestalteten, auf das Flugzeug in Form und Lage abgestimmten Tragorgan untergreifen.

Alle vorbeschriebenen Merkmale können einzeln oder in beliebiger Kombination miteinander erfindungswesentlich sein.

Erwähnt sei noch, daß der Parallellenker 20 (Fig. 2) für die Radschuhe 16 bzw. 17 an seinem einen Ende 27 mit dem Radschuh 16 bzw. 17 (vgl. Fig. 7) und mit seinem anderen Ende mit dem Hubschlitten 9 verbunden ist.

Unter "kleinen und mittelgroßen Flugzeugen" sollen in dieser Anmeldung ein- oder mehrmotorige Flugzeuge der E- oder I-Klasse verstanden werden, die ein Gewicht bis zu 2 t bzw. bis zu 5,6 t haben.

– Ansprüche –

ENTANWÄLTE

NG. H. SCHMITT

G. W. MAUCH.

78 FREIBURG I. BR.
DREIKÖNIGSTR. 13   13. Dez. 1984
TELEFON: (07 61)

13

01 58 735

Firma
Zippo Gesellschaft
für Hebetechnik mbH
Heinrich-Hertz-Straße 21
7600 Offenburg

UNSERE AKTE · BITTE STETS ANGEBEN!

E 84 578 S

Patentansprüche

1. Hebe- und Abstellvorrichtung für kleine und mittelgroße Flugzeuge, d a d u r c h   g e k e n n -
z e i c h n e t , daß die Vorrichtung zwei Hubsäulen
(3 a, 3 b) mit je einem anhebbaren und absenkbaren
Hubschlitten (9) aufweist, und daß an den Hubschlitten Tragarme (11 bis 14) befestigt sind, die an ihren
freien Enden einen Radschuh (15, 16 oder 17) od.dgl.
Tragorgan tragen.

2. Vorrichtung nach Anspruch 1, dadurch gekennzeichnet,
daß - in Einfahrrichtung (Pf 1) eines Flugzeuges (2)
gesehen - die beiden vorderen Tragamre (11, 13) gemeinsam einen Bug-Radschuh (15) halten und vorzugsweise die hinteren Tragarme (12, 14) je einen Radschuh (16, 17) an ihrem freien Ende aufweisen.

3. Vorrichtung nach Anspruch 1 oder 2, dadurch gekennzeichnet, daß die Tragarme (11 bis 14) schwenk- und/
oder längenveränderbar sind und daß vorzugsweise die
Lage dieser Tragarme in unterschiedlichen Verschwenk-
und/oder Längspositionen verriegelbar ist.

/ 14

4. Vorrichtung nach einem der Ansprüche 1 bis 3, dadurch gekennzeichnet, daß zumindest die für die Heckräder vorgesehenen Radschuhe (16, 17) verschwenkbar an den Tragarmen (11 bis 14) angelenkt sowie vorzugsweise durch Parallellenker (20) od. dgl. Schwenkführungen in Einfahrrichtung (Pf 1) gehalten sind.

5. Vorrichtung nach einem der Ansprüche 1 bis 4, dadurch gekennzeichnet, daß die Hubschlitten (9) in den jeweiligen Hubsäulen (3 a, 3 b) in ihrer Obenstellung formschlüssig mechanisch verriegelbar sind und daß zweckmäßigerweise an den Hubsäulen eine Löseeinrichtung für die mechanische Verriegelung der Hubschlitten (9) vorgesehen ist.

6. Vorrichtung nach einem der Ansprüche 1 bis 5, dadurch gekennzeichnet, daß an ihr, vorzugsweise oben auf einer Hubsäule (3 a), eine Signallampe (32) vorgesehen ist.

7. Vorrichtung nach einem der Ansprüche 1 bis 6, dadurch gekennzeichnet, daß Steuerorgane für das Auf- und Ablassen der Hubschlitten (9), gegebenenfalls für den Betrieb der Signallampe (32) verschließbar sind, vorzugsweise, daß ein Schaltkasten (30), der gegebenenfalls eine Türe od. dgl. besitzt, mittels eines Schlosses (31) gegen unbefugte Betätigung verschließbar ist.

8. Vorrichtung nach einem der Ansprüche 1 bis 7, dadurch gekennzeichnet, daß an wengistens einem Radschuh, vorzugsweise am Bug-Radschuh (15) eine lösbare Radhalterung vorgesehen ist, die zweckmäßigerweise eine lösbare Halteschlaufe (36) aufweist.

9. Vorrichtung nach Anspruch 8, dadurch gekennzeichnet, daß zwischen einem Radschuh (15) sowie einer zugehörigen Radhalterung (33), vorzugsweise der Halteschlaufe (36) und dem Radschuh (15) eine auf Zuglast ansprechende Last-Schalteinrichtung (39) vorgesehen ist.

10. Vorrichtung nach einem der Ansprüche 1 bis 9, dadurch gekennzeichnet, daß die beiden Hubsäulen (3 a, 3 b) miteinander in Verbindung stehen, vorzugsweise mittels einer einen Leitungskanal, eine Leitungsrinne od. dgl. freilassenden Verbindungsplatte od. dgl.

11. Vorrichtung nach einem der Ansprüche 1 bis 10, dadurch gekennzeichnet, daß die mechanische Verriegelung (44) eine bezüglich der lotrechten Bewegung des Hubschlittens (9) mit diesem fest verbundene Sicherungstraverse (45) aufweist, welche in der Obenstellung des Hubschlittens (9) in eine mit dem Säulenkörper (4) in Verbindung stehende Aussparung (46) einrückbar ist und den Hubschlitten formschlüssig gegen Absenken sichert.

12. Vorrichtung nach Anspruch 11, dadurch gekennzeichnet, daß die Sicherungstraverse (45) eine Sicherungsnase (51) aufweist, mit der sie beim Verriegeln hinter einen Riegel (48) gelangt, der im Zusammenwirken mit dieser Sicherungsnase eine unbeabsichtigte Rückzugsbewegung der Traverse (45) verhindert.

13. Vorrichtung nach Anspruch 11 oder 12, dadurch gekennzeichnet, daß an der Verriegelung (44) Verstellmagnete od. dgl. Verstelleinrichtung vorgesehen sind, welche den Riegel (48) in eine Lösestellung und die Traverse (45) in eine Freigabestellung bewegen können.

14. Vorrichtung nach einem der Ansprüche 11 bis 13, dadurch gekennzeichnet, daß die Verriegelung (44)
einen Taster od. dgl. Verstellorgan besitzt, mittels dessen Betätigung die Hubschlitten (9) mit
ihren Sicherungstraversen gegenüber einer Auflagestellung dieser Traversen in eine Traversen-Verstellposition (Fig. 5) anhebbar sind.

15. Vorrichtung nach einem der Ansprüche 1 bis 14, dadurch gekennzeichnet, daß die Höhe (h) der Grundplatte (21) der Radschuhe (15, 16, 17) flach ausgebildet ist, vorzugsweise etwa 3 mm.

- Zusammenfassung -

/17

Fig.1

Fig.2

Fig.3

33

36

37

15

h

35    21

Fig.4

50    44

49

V
51

45

V
47

51    46

45

Pf6

48    47

52

Fig.5

0158735

Fig.6

Fig.7

Fig.8

# EUROPÄISCHER RECHERCHENBERICHT

Europäisches
Patentamt

EP 84 11 5935

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 460 621  (E. DRESTLER)<br>*  Patentanspruch  1;  Figuren 1,2,2a * | 1,3 | B 64 F  1/36<br>B 66 F  7/00 |
| X | FR-A-2 453 103  (H.E. PEDERSEN)<br>* Seite 1, Zeilen 1-24; Figur 1 * | 1,3 | |
| X | FR-A-2 265 667  (C.F.E.A.)<br>*  Seite 1, Zeilen 30-33; Figur 1 * | 1,3 | |
| A | GB-A-2 001 588  (K.G. LANDAEUS) | | |
| A,D | US-A-3 954 197  (C.W. DEAN) | | |
| A,D | GB-A-1 186 689  (E.J. DONNELLY) | | |

RECHERCHIERTE SACHGEBIETE (Int. Cl.4)

B 64 F
B 66 F

Der vorliegende Recherchenbericht wurde für alle Patentansprüche erstellt.

| Recherchenort<br>DEN HAAG | Abschlußdatum der Recherche<br>08-05-1985 | Prüfer<br>MARTINOZZI G.M.E. |
|---|---|---|